**Europäisches Patentamt**

**European Patent Office**

**Office européen des brevets**

(19)

(11) Veröffentlichungsnummer: **0 057 283**
**A1**

## (12) EUROPÄISCHE PATENTANMELDUNG

(21) Anmeldenummer: **81110542.8**

(22) Anmeldetag: **17.12.81**

(51) Int. Cl.³: **A 01 F 12/18**

(30) Priorität: **29.01.81 NL 8100444**

(43) Veröffentlichungstag der Anmeldung: **11.08.82**
**Patentblatt 82/32**

(84) Benannte Vertragsstaaten: **BE DE FR GB IT SE**

(71) Anmelder: **Vogelenzang, Alexander Jan,
Wageningsestraat 45, NL-6671 DB Zetten (NL)**

(72) Erfinder: **Vogelenzang, Alexander Jan,
Wageningsestraat 45, NL-6671 DB Zetten (NL)**

(74) Vertreter: **Gramm, Werner, Prof. Dipl.-Ing. et al,
Patentanwälte Gramm + Lins Theodor-Heuss-Strasse 2,
D-3300 Braunschweig (DE)**

(54) **Mehrtrommeldreschwerk.**

(57) Ein Mehrtrommeldreschwerk umfaßt zumindest zwei hintereinandergeschaltete Dresch- und Trennvorrichtungen (16, 21; 48, 49), die jeweils ein Querstromgebläse (3) umfassen, dessen Läufer (10) in einem weitgehend geschlossenen stationären Gehäuse (12, 18) umläuft und auf einem Teilumfang von einem Siebkorb (7, 28, 32) konzentrisch umgriffen ist, unter dem das Gehäuse (12, 18) in einen nach unten offenen Körnerauswurf (15, 31, 52, 53, 54) mündet. An einen oberen Einlaß (13, 26, 20) für das Erntegut schließt sich ein zwischen Läufer (10) und Siebkorb (7, 28, 32) gebildeter Dresch- bzw. Trennkanal (27) an, der in einen angenähert tangential nach oben austretenden Strohauswurf (14, 17) mündet. Der Gebläseluftstrom (9) ist vom Einlaß (26, 20) durch den Läufer (10) hindurch in den Strohauswurf (14, 17) gerichtet. Eine geschlossene Verbindungsleitung (19) verbindet den Strohauswurf (17) der vorderen Dresch- und Trennvorrichtung (16, 47, 48) mit dem Einlaß (20) der nachgeschalteten Dresch- und Trennvorrichtung (21, 48, 49).

0057283

## Patentanwälte GRAMM + LINS

Dipl.-Ing. Prof. Werner Gramm
Dipl.-Phys. Edgar Lins

D-3300 Braunschweig

Alexander Jan Vogelenzang

Wageningsestraat 45

Zetten / Niederlande

Telefon:     (05 31) 8 00 79
Telex:       09 52 620

Anwaltsakte   683-4 EP-1
Datum          16.Dez.1981


"Mehrtrommeldreschwerk"


Die Erfindung betrifft ein Mehrtrommeldreschwerk, bestehend
aus zumindest zwei hintereinandergeschalteten Dresch- und
Separiertrommeln.

Derartige Vorrichtungen sind in zahlreichen Ausführungsbeispielen bekannt, die z.B. in "Grundlagen der Landtechnik" Bd.24
(1974) Nr. 3 auf den Seiten 94 bis 102 ausführlich beschrieben
sind.

Durch die Anordnung mehrerer hintereinandergeschalteter Drescheinheiten läßt sich zwar die Dreschwirkung intensivieren, meist
wird eine derartige Anordnung aber gewählt, um nach dem in der
ersten Drescheinheit erfolgten Ausdrusch in den nachgeschalteten Trommeln ein schnelles Abtrennen der bereits ausgedroschenen
Körner aus dem Stroh zu erreichen. Derartige Mehrtrommeldreschwerke bauen kompakter als Dreschwerke mit nachgeschaltetem herkömmlichen Schüttler. Jedoch besteht ein schwerwiegender Nachteil aller bisher bekanntgewordenen Mehrtrommeldreschwerke
darin, daß der Spreu- und Kurzstrohanteil mit zunehmendem Korbabscheidungsgrad ansteigt. Das Abscheideproblem verlagert sich
somit vom Dreschwerk und Schüttler auf die Reinigung.

- 2 -

0057283

- 2 -

Der Erfindung liegt die Aufgabe zugrunde, das eingangs erläuterte Mehrtrommeldreschwerk hinsichtlich der Abscheidung zu verbessern.

Diese Aufgabe wird erfindungsgemäß dadurch gelöst, daß zumindest eine der Dresch- und Trennvorrichtungen ein Querstromgebläse mit folgenden Merkmalen umfaßt:

a) Der Läufer des Querstromgebläses läuft in einem weitgehend geschlossenen stationären Gehäuse um und ist auf einem Teilumfang von einem Siebkorb konzentrisch umgriffen, unter dem das Gehäuse in einen nach unten offenen Körnerauswurf mündet;

b) an einen oberen Einlaß für das Erntegut schließt sich ein zwischen Läufer und Siebkorb gebildeter Dresch- bzw. Trennkanal an, der in einen angenähert tangential nach oben austretenden Strohauswurf mündet;

c) der Gebläseluftstrom ist vom Einlaß durch den Läufer hindurch in den Strohauswurf gerichtet.

Besonders zweckmäßig ist es, wenn zumindest zwei jeweils ein Querstromgebläse umfassende Dresch- und Trennvorrichtungen vorgesehen sind, wobei eine geschlossene Verbindungsleitung den Strohauswurf der vorderen Dresch- und Trennvorrichtung mit dem Einlaß der nachgeschalteten Dresch- und Trennvorrichtung verbindet.

Dabei ist es vorteilhaft, wenn die vordere Dresch- und Trennvorrichtung im Umfangsbereich ihres Läufers konzentrisch umlaufende Dreschmittel aufweist, die mit am Siebkorb angeordneten stationären Dreschmitteln zusammenwirken.

Die umlaufenden Dreschmittel können entweder am Läufer befestigt sein und mit diesem eine Dreschtrommel bilden, oder aber auf einer separaten Dreschmitteltrommel angeordnet sein, die mit einem eigenen Drehantrieb versehen ist.

- 3 -

- 3 -

In der deutschen Offenlegungsschrift 30 03 235 ist bereits eine
Dreschvorrichtung offenbart, die eine einzige Dreschtrommel aufweist, die ein Querstromgebläse umfaßt. Die Dreschtrommel ist
über einen Teil ihres Umfanges von einem stationären Gehäuse abgedeckt und mantelseitig mit Dreschleisten, Stiften o.dgl. bestückt, die mit stationären Dreschelementen zusammenwirken, die
auf der Innenseite eines die Dreschtrommel teilweise kozentrisch
umgreifenden, als Sieb ausgebildeten Dreschkorbes angeordnet
sind. Unter dem Dreschkorb ist ein Sammel- und Abführkanal für
das ausgedroschene, durch den Dreschkorb hindurchfallende Nutzgut vorgesehen. Aus der zwischen Dreschtrommel und Dreschkorb gebildeten Dreschzone wird das aus Stroh, Spreu und restlichem
Nutzgut bestehende Gutgemisch unter Wirkung der kinetischen
Energie sowie des Gebläseluftstromes in einen Strohauswurf gefördert, der etwa tangential nach oben aus dem Gehäuse ausmündet.

Bei dieser vorbekannten Ausführungsform kann das Querstromgebläse
innerhalb der Dreschtrommel angeordnet und dieser gegenüber mit
einer unterschiedlichen Drehzahl antreibbar sein. In dem stationären Gehäuse ist für das Querstromgebläse eine zusätzliche
Luftansaugöffnung vorgesehen, deren Ansaugquerschnitt veränderbar ist.

Bei dieser vorbekannten, vorwiegend als Reisdreschmaschine eingesetzten Vorrichtung erzeugt das Querstromgebläse sowohl an der
Einlauföffnung als auch am Körneraustritt einen Sog. Da die Körner somit durch einen vertikalen Luftstrom herabfallen, ist das
separierte Nutzgut besonders saubert. Der wesentliche Nachteil
dieser Reisdreschmaschine liegt jedoch darin, daß etwa 3 bis 5 %
Körner mit dem Stroh mittransportiert werden.

Bei dem erfindungsgemäßen Mehrtrommeldreschwerk wird nun eine
derartige, als Reisdreschmaschine bekanntgewordene Vorrichtung
in der vorstehend beschriebenen Weise mit einer nachgeschalteten

- 4 -

Vorrichtung verbunden, die im wesentlichen die Aufgabe hat, die Körner vom Stroh zu trennen. So können bei der nachgeschalteten Vorrichtung z.B. die Dreschkorbleisten fehlen. Das erfindungsgemäße Mehrtrommeldreschwerk kann aber auch insgesamt einer herkömmlichen Dreschtrommel nachgeschaltet werden. In jedem Fall erhält man eine sehr gute Körnerseparierung aus dem mit hoher Geschwindigkeit durch die Dresch- bzw. Trennzone zwischen Gebläse und Siebkorb sowie durch die nachgeschaltete Verbindungsleitung geförderten Stroh. Durch die durch den Körnerausfall nach oben gesaugte Luft fallen wegen des größeren Luftwiderstandskoeffizienten Kurzstroh und Spreu praktisch überhaupt nicht durch den Siebkorb hindurch, sondern werden vielmehr unter Einwirkung des vom Querstromgebläse erzeugten Luftstromes von den Körnern getrennt und zusammen mit dem Langstroh abgeführt.

Zur Verbesserung der Luftführung kann es zweckmäßig sein, im Zentrum des Läufers Luftleitelemente stationär anzuordnen, wie sie z.B. in dem Buch "Ventilatoren" von Bruno Eck, 1952, auf Seite 170 dargestellt und beschrieben sind.

Das erfindungsgemäße Mehrtrommeldreschwerk zeichnet sich durch eine sehr hohe Durchgangsgeschwindigkeit des auszudreschenden Nutzgutes aus in Verbindung mit einer ausgezeichneten Dreschwirkung und einer mit hohem Wirkungsgrad arbeitenden Separierung; in den abgeschiedenen Körnern sind kaum Spreu und Kurzstroh enthalten. Das neue Mehrtrommeldreschwerk baut sehr kompakt und ist in seiner Wirkungsweise unempfindlich gegenüber einer Schrägstellung. Die Leistung der neuen Vorrichtung liegt sehr hoch, da die Durchgangsgeschwindigkeit nicht durch die Verwendung eines Schüttlers eingeschränkt wird. Die neue Vorrichtung läßt sich überdies besonders preiswert herstellen.

- 5 -

In der Zeichnung sind einige als Beispiele dienende Ausführungs=
formen der Erfindung dargestellt. Es zeigen:

    Figur 1    eine als Läufer  ausgebildete Dreschtrommel;

    Figur 2    einen Dreschmantel;

    Figur 3    im Querschnitt den prinzipiellen Aufbau eines
              in einer Drescheinrichtung angeordneten Gebläses
              gemäß der deutschen Offenlegungsschrift 30 03 235;

    Figur 4    in Seitenansicht zwei hintereinandergeschaltete
              Dresch- und Trenneinrichtungen;

    Figur 5    eine abgewandelte Ausführungsform in einer Darstellung gemäß Figur 4;

    Figur 6    in schematischer Darstellung die Verwendung des
              erfindungsgemäßen Mehrtrommeldreschwerkes in einem
              Mähdrescher und

    Figur 7    eine abgewandelte Ausführungsform in einer Dar-
              stellung gemäß Figur 6.

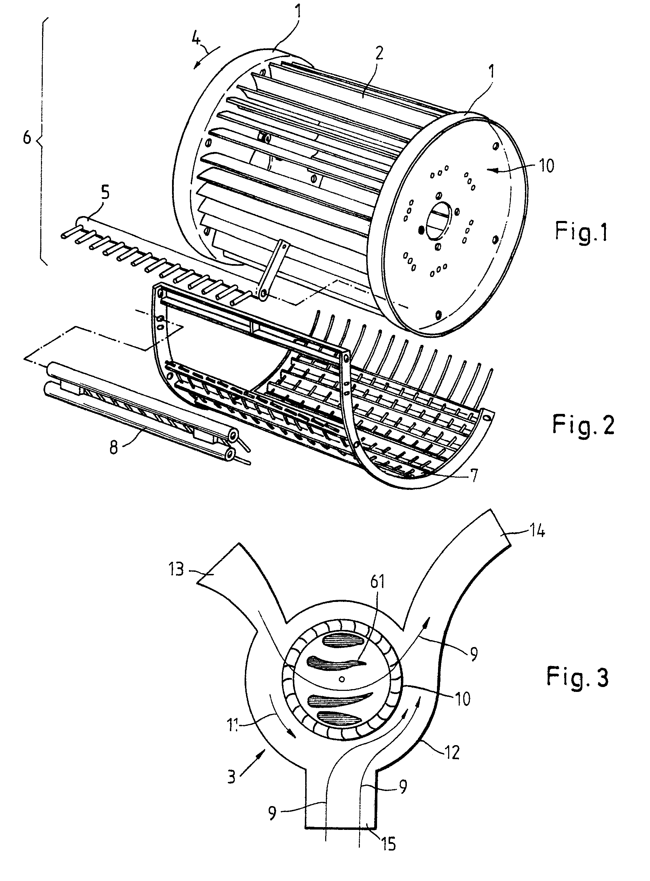

Figur 1 zeigt ein en aus zwei Stirnwandungen 1 mit dazwischen angeordneten Schaufeln 2 bestehenden Läufer 10, der in Richtung des
Pfeiles 4 angetrieben und mit Stiftendreschleisten 5 bestückt
ist und so eine Dreschtrommel 6 bildet. In der Zeichnung ist aus
Gründen der besseren Übersichtlichkeit nur eine Stiftendreschleiste 5 in einer Explosionsdarstellung gezeigt.

Figur 2 zeigt einen Siebkorb 7, der mit Stiftendreschleisten 8
bestückt ist und so einen Dreschmantel bildet. Die Stiftendreschleisten 5 der Dreschtrommel 6 wirken mit den Stiften-

- 6 -

dreschleisten 8 des Dreschmantels bzw. Siebkorbes 7 zusammen, wobei zumindest die Stiftendreschleisten 8 verstellbar sind.

Figur 3 zeigt in einer Prinzipskizze die von dem Läufer 10 des
Gebläses erzeugte Luftströmung 9. Der Pfeil 11 zeigt die Drehrichtung des Läufers 10, der von einem stationären Gehäuse 12 umschlossen ist, das einen Einlauf 13 für das auszudreschende Gut
sowie einen Strohauswurf 14 aufweist. Das Gehäuse 12 ist mit
einem unteren Körnerauswurf 15 versehen. Im Zentrum des Läufers 10 sind stationäre Luftleitelemente 61 angeordnet. Läufer 10 und Gehäuse 12 bilden ein Querstromgebläse 3.

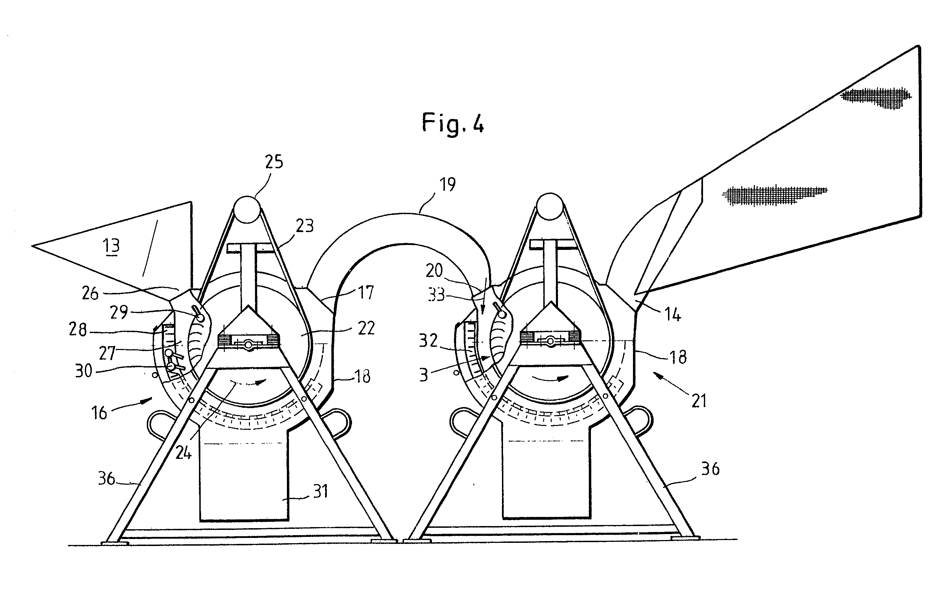

Figur 4 zeigt ein Mehrtrommeldreschwerk gemäß der Erfindung. Es
ist eine vordere Dresch- und Trennvorrichtung 16 vorgesehen,
deren Strohauslaßöffnung 17 über eine Verbindungsleitung 19 an
eine Stroheinlaßöffnung 20 einer nachgeschalteten Dresch- und
Trennvorrichtung 21 angeschlossen ist. Beide Dresch- und Trennvorrichtungen 16,21 weisen ein angenähert trommelförmiges Gehäuse 18 auf, in dem jeweils eine Dreschtrommel 22 gelagert ist,
die über einen Riemen 23 in Pfeilrichtung 24 von einem Motor 25
angetrieben wird. Das Dreschgut gelangt über den Einlauf 13 und
eine Einlaßöffnung 26 in eine zwischen Dreschtrommel 22 und
Dreschmantel 28 gebildete ringförmige Dresch- und Trennzone 27.
Hier erfolgt der Ausdrusch unter Wirkung der umlaufenden Stiftendreschleisten 29 der Dreschtrommel 22 und der stationären Stiftendreschleisten 30 des Dreschmantels bzw. Siebkorbes 28. Während
der Förderung des Dreschgutes durch die Dresch- und Trennzone 27
wird der größte Teil der ausgedroschenen Körner unter Wirkung
der Zentrifugalkraft sowie der zwischen Dreschtrommel 22 und
Dreschmantel 28 erzeugten Reibung durch den Siebkorb hindurch
ausgeworfen und gelangt in einen Körnerauswurf 31, der unterhalb
des Siebkorbes von dem stationären Gehäuse 18 gebildet wird. Da
das Gebläse - wie Figur 3 zeigt - auch durch den Körnerauswurf 31
von unten nach oben Luft ansaugt, wird der Durchtritt von Spreu-
und Kurzstroh-Teilen durch den Siebkorb in den Körnerauswurf 31 verhindert. Vielmehr werden Spreu- und Kurzstroh-Teile aufgrund ihres größeren Luftwiderstandskoeffizienten gegenüber den Körnern durch den angesaugten Luftstrom mitgeführt und gelangen zusammen mit dem Langstroh in die Strohauslaßöffnung 17. Die in der ersten Dresch- und Trenneinheit 16 abgeschiedenen Körner weisen somit kaum Spreu und Kurzstroh auf. Da sich jedoch in dem in die Strohauslaßöffnung 17 ankommenden Gemisch noch nicht abgeschiedene Körner befinden, ist der ersten Dresch- bzw. Trenneinheit 16 eine zweite Vorrichtung 21 nachgeschaltet, in der die Abscheidung der restlichen Körner durchgeführt werden soll. Da der eigentliche Ausdrusch bereits in der Vorrichtung 16 erfolgt ist, können in der nachgeschalteten Vorrichtung 21 die stationären Stiftendreschleisten weggelassen werden; es ist somit nur noch ein Siebkorb 32 angeordnet, so daß das durch die ringförmige Trennzone hindurchgeführteGemisch nicht unnötig zerschlagen wird; außerdem wird dadurch die Antriebsleistung verringert.

Der Krümmungsradius der Verbindungsleitung 19 nimmt in Durchströmrichtung ab, so daß die Verbindungsleitung angenähert tangential von oben in den Trennkanal der nachgeschalteten Vorrichtung 21 mündet, so wie es in Figur 4 der Pfeil 33 andeutet. Dadurch wird der Abscheidevorgang noch weiter verbessert.

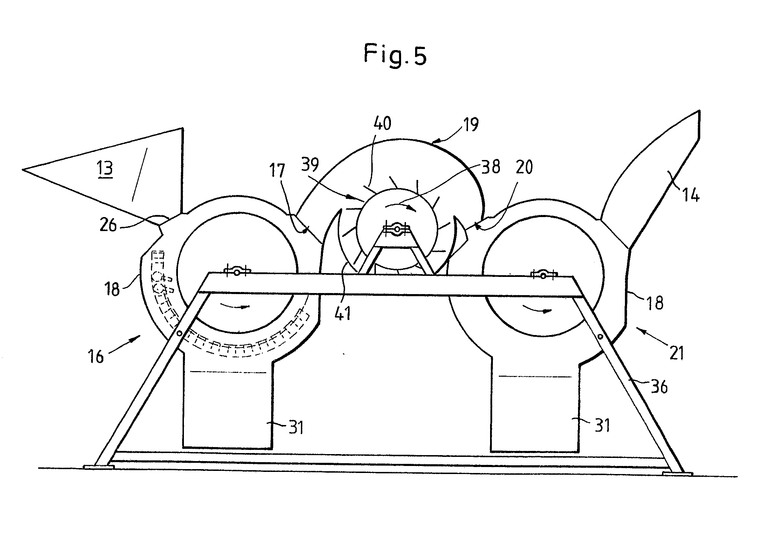

Die in Figur 5 dargestellte Vorrichtung unterscheidet sich von der gemäß Figur 4 in erster Linie darin, daß die beiden Dresch- und Trenneinrichtungen 16,21 in einem gemeinsamen Rahmengestell 36 angeordnet sind. Außerdem ist in der Verbindungsleitung 19 eine in Pfeilrichtung 38 angetriebene Fördertrommel 39 angeordnet, deren Mitnehmer 40 die Förderung des von der Strohauslaßöffnung 17 kommenden Gemisches in Richtung auf die Stroheinlaßöffnung 20 unterstützen, um so die Durchgangsleistung zu erhöhen. Zur Vermeidung von Luftverlusten ist die Fördertrommel 39 in einem geschlossenen Gehäuse 41 angeordnet. Aus Gründen der besseren Übersichtlichkeit ist in der Figur 5 der An-

- 8 -

trieb für die Fördertrommel 39 nicht dargestellt.

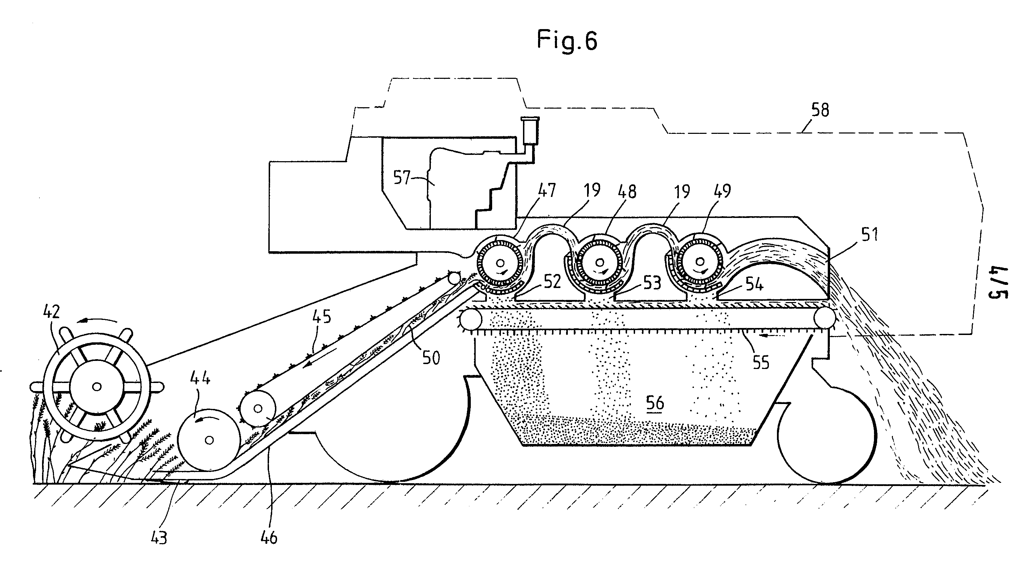

Figur 6 zeigt ein Beispiel für die Verwendung eines erfindungsgemäßen Mehrtrommeldreschwerkes in einem Mähdrescher. Eine
Haspel 42, Schneidvorrichtung 43, Förderschnecke 44 sowie ein
Hochförderer 45 sind an einem Gestell 46 montiert und bilden
eine bei Mähdreschern übliche Einheit. Das Mehrtrommeldreschwerk
wird durch drei hintereinandergeschaltete Dresch-bzw. Trenneinheiten 47,48 und 49 gebildet, die von dem Dreschgut 50 mit grosser Durchsatzgeschwindigkeit durchlaufen werden. Die Maschine
weist einen hinteren Auslaß 51 auf, durch den Stroh, Spreu und
Kurzstroh hinter der Maschine auf die Bodenoberfläche abgeworfen
werden. Die ausgedroschenen und abgeschiedenen Körner fallen
durch den jeweiligen Körnerauswurf 52,53 bzw. 54 auf ein umlaufendes Siebband 55, das eine einstellbare Maschenweite aufweisen
kann, um so eventuell noch in den Körnern befindliches Kurzstroh
auffangen und nach hinten abführen zu können. Die durch das
Siebband hindurchfallenden Körner werden in einem Sammelbehälter 56 aufgefangen. Der Antrieb erfolgt über einen Motor 57.

Die gestrichelte Linie 58 deutet die Außenkontur eines Mähdreschers mit herkömmlichem Dresch- und Trennmechanismus bei vergleichbarer Leistung an.

Durch die kompakte Bauweise des erfindungsgemäßen Mehrtrommeldreschwerkes kann der genannte Sammelbehälter 56 unter der Maschine angeordnet werden, so daß ein niedriger Schwerpunkt erreicht wird, was insbesondere bei Arbeiten an Hanglagen vorteilhaft ist, wo die gute Wirkung der Dresch- und Trennvorrichtungen
unbeeinflußt bleibt.

Bei der Maschine sind keine teueren hin- und hergehenden Maschinenteile erforderlich; die gesamte Maschine verlangt daher geringere Antriebsleistung und weniger Wartung.

- 9 -

- 9 -

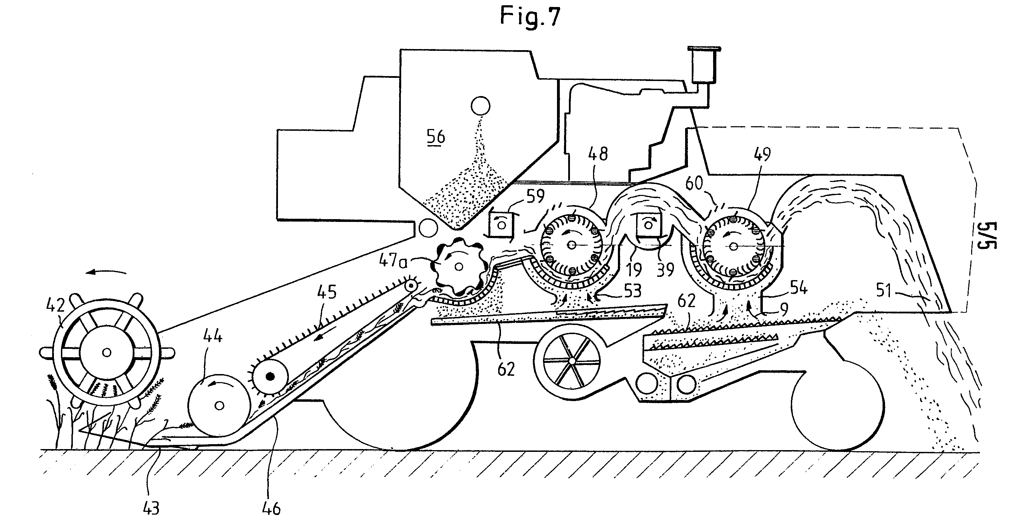

Der in Figur 7 dargestellte Mähdrescher unterscheidet sich von dem gemäß Figur 6 in erster Linie darin, daß als erste Drescheinheit eine herkömmliche Drescheinheit 47a vorgesehen ist, der zwei erfindungsgemäß ausgebildete Trenneinrichtungen 48,49 nachgeschaltet sind. Zwischen der konventionellen Drescheinheit 47a und der nachgeschalteten Trenneinrichtung 48 ist eine angetriebene Fördereinrichtung 59 vorgesehen. Unter den Dresch- bzw. Trennvorrichtungen 47a, 48 und 49 sind Rüttelsiebe 62 angeordnet, die etwaig noch in den Körnern befindlichen Spreu- bzw. Kurzstroh-Teile absondern und nach hinten austragen. Die durch die Rüttelsiebe 62 hindurchfallenden Körner werden im unteren Bereich der Maschine gesammelt und von dort in den bei diesem Ausführungsbeispiel oben liegenden Sammelbehälter 56 gefördert.

Zumindest ein Teil des unterhalb der Drescheinheit 47a auf das Rüttelsieb 62 gelangenden Gemisches aus Spreu und Kurzstroh wird im Bereich der nachgeschalteten Körnerauswürfe 53,54 durch den Gebläseluftstrom 9 nach oben abgesaugt, so daß die Belastung der Rüttelsiebe verringert wird.

Aus den vorstehenden Erläuterungen ergeben sich für einen Durchschnittsfachmann zahlreiche Abwandlungen und Modifikationen, die durch die Erfindung mit erfaßt sein sollen.

Gr/Gru.

0057283

# Patentanwälte GRAMM + LINS

Dipl.-Ing. Prof. Werner Gramm
Dipl.-Phys. Edgar Lins

D-3300 Braunschweig

Alexander Jan Vogelenzang
Wageningsestraat 45
Zetten / Niederlande

Telefon:　　(05 31) 8 00 79
Telex:　　　09 52 620

Anwaltsakte ,　683-4 EP-1
Datum　　　　16.Dez.1981

Patentansprüche:

1. Mehrtrommeldreschwerk, bestehend aus zumindest zwei hintereinandergeschalteten Dresch- und Separiertrommeln (6,22), dadurch gekennzeichnet, daß zumindest eine der Dresch- und Trennvorrichtungen (16,21;48,49) ein Querstromgebläse (3) mit folgenden Merkmalen umfaßt:

   a) Der Läufer (10) des Querstromgebläses (3) läuft in einem weitgehend geschlossenen stationären Gehäuse (12,18) um und ist auf einem Teilumfang von einem Siebkorb (7,28,32) konzentrisch umgriffen, unter dem das Gehäuse (12,18) in einen nach unten offenen Körnerauswurf (15,31,52,53,54) mündet;

   b) an einen oberen Einlaß (13,26,20) für das Erntegut schließt sich ein zwischen Läufer (10) und Siebkorb (7, 28,32) gebildeter Dresch- bzw. Trennkanal (27) an, der in einen angenähert tangential nach oben austretenden Strohauswurf (14,17) mündet;

   c) der Gebläseluftstrom (9) ist vom Einlaß (26,20) durch den Läufer (10) hindurch in den Strohauswurf (14,17) gerichtet.

- 2 -

2. Mehrtrommeldreschwerk nach Anspruch 1, dadurch gekennzeichnet, daß zumindest zwei jeweils ein Querstromgebläse (3) umfassende Dresch- und Trennvorrichtungen vorgesehen sind, wobei eine geschlossene Verbindungsleitung (19) den Strohauswurf (17) der vorderen Dresch- und Trennvorrichtung (16,52,53) mit dem Einlaß (20) der nachgeschalteten Dresch- und Trennvorrichtung (21,53,54) verbindet.

3. Mehrtrommeldreschwerk nach Anspruch 2, dadurch gekennzeichnet, daß die vordere Dresch- und Trennvorrichtung (16,47) im Umfangsbereich ihres Läufers (10) konzentrisch umlaufende Dreschmittel (5,29) aufweist, die mit am Siebkorb (7,28,32) angeordneten stationären Dreschmitteln (8,30) zusammenwirken.

4. Mehrtrommeldreschwerk nach Anspruch 3, dadurch gekennzeichnet, daß die umlaufenden Dreschmittel (5,29) am Läufer (10) befestigt sind und mit diesem eine Dreschtrommel (6,22) bilden.

5. Mehrtrommeldreschwerk nach Anspruch 3, dadurch gekennzeichnet, daß die umlaufenden Dreschmittel (5,29) auf einer separaten Dreschmitteltrommel angeordnet sind, die mit einem eigenen Drehantrieb versehen ist.

6. Mehrtrommeldreschwerk nach Anspruch 3, 4 oder 5, dadurch gekennzeichnet, daß die umlaufenden Dreschmittel (5,29) und/oder die stationären Dreschmittel (8,30) einstellbar sind.

7. Mehrtrommeldreschwerk nach einem der vorhergehenden Ansprüche, dadurch gekennzeichnet, daß auch die nachgeschaltete Dresch- und Trennvorrichtung (21,48,49) mit Dreschmitteln (5,8,29,30) ausgestattet ist.

8. Mehrtrommeldreschwerk nach einem der Ansprüche 2 bis 7, dadurch gekennzeichnet, daß die Verbindungsleitung (19) eine nach oben gebogene Form aufweist.

9. Mehrtrommeldreschwerk nach Anspruch 8, dadurch gekennzeichnet, daß der Krümmungsradius der Verbindungsleitung (19) in
Durchströmrichtung abnimmt, so daß die Verbindungsleitung
angenähert tangential von oben in den Dresch- bzw. Trennkanal (27) der nachgeschalteten Dresch- und Trennvorrichtung (21,48,49) mündet.

10. Mehrtrommeldreschwerk nach einem der Ansprüche 2 bis 9,
dadurch gekennzeichnet, daß in der Verbindungsleitung (19)
eine Fördereinrichtung (39) vorgesehen ist.

11. Mehrtrommeldreschwerk nach einem der vorhergehenden Ansprüche,
dadurch gekennzeichnet, daß in dem den Läufer (10) umgebenden
Gehäuse (12,18) und/oder in der Verbindungsleitung (19) eine
zusätzliche Luftansaugöffnung (60) vorgesehen ist.

12. Mehrtrommeldreschwerk nach Anspruch 11, dadurch gekennzeichnet, daß der Querschnitt der Luftansaugöffnung (60) veränderbar ist.

13. Mehrtrommeldreschwerk nach einem der vorhergehenden Ansprüche, dadurch gekennzeichnet, daß im Zentrum des Läufers (10) Luftleitelemente (61) stationär angeordnet sind.

14. Mehrtrommeldreschwerk nach einem der vorhergehenden Ansprüche, dadurch gekennzeichnet, daß die Läufer (10) der
hintereinandergeschalteten Dresch- und Trennvorrichtungen
(16,21; 47,48,49) separat einstellbare Drehzahlen aufweisen.

15. Mehrtrommeldreschwerk nach einem der vorhergehenden Ansprüche, dadurch gekennzeichnet, daß den beiden hintereinandergeschalteten, jeweils ein Querstromgebläse (3) aufweisenden Dresch- und Separiertrommeln (6,22) eine Dreschtrommel (47a) beliebiger Bauart vorgeschaltet ist.

0057283

- 4 -

16. Mehrtrommeldreschwerk nach einem der vorhergehenden Ansprüche, dadurch gekennzeichnet, daß es Bestandteil eines
    schüttlerlosen Mähdreschers ist.

Patentanwälte
G r a m m   +   L i n s
Gr/Gru.

Fig.1

Fig.2

Fig.3

Fig. 4

Fig.5

Fig.6

# Fig.7

0057283

Europäisches Patentamt

**EUROPÄISCHER RECHERCHENBERICHT**

Nummer der Anmeldung
EP 81 11 0542

| Kategorie | Kennzeichnung des Dokuments mit Angabe, soweit erforderlich, der maßgeblichen Teile | betrifft Anspruch |
|---|---|---|
| **EINSCHLÄGIGE DOKUMENTE** | | |
| XY | FR - A - 1 059 366 (LANZ)<br>* Insgesamt * | 1,2,3,<br>8,9,16 |
| DY | DE - A - 3 003 235 (VOGELENZANG)<br>* Insgesamt * | 1,3,4,<br>5,6,11,<br>12,14,<br>16 |
| A | NL - A - 7 701 151 (VOGELENZANG)<br>* Seite 3, Zeile 29 - Seite 4, Zeile 23 * | 1,3,4 |
| A | DE - B - 1 015 254 (KARAU)<br>* Spalte 2, Zeile 48 - Spalte 3, Zeile 13 * | 1 |
| A | DE - C - 941 823 (BAYN)<br>* Anspruch 1 * | 10 |
| A | US - A - 1 357 275 (CLAY)<br>* Seite 1, Zeile 88 - Seite 2, Zeile 90 * | 14 |
| A | GB - A - 2 052 236 (CLAAS)<br>* Insgesamt * | 16 |

./.

**KLASSIFIKATION DER ANMELDUNG (Int. Cl.³)**

A 01 F 12/18

**RECHERCHIERTE SACHGEBIETE (Int. Cl.³)**

A 01 F

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 01-04-1982 | DE LAMEILLEURE |

EPA form 1503.1  06.78

0057283

Eur. päisches r tentamt

**EUROPÄISCHER RECHERCHENBER'CHT**

| | EINSCHLÄGIGE DOKUMENTE | | KLASSIFIKATION DER ANMELDUNG (In . Cl.³) |
|---|---|---|---|
| Katego ie | . nnzeichnung des Dok me. mit Angabe soweit erf derlich, der . ß eb'ic en Teile | be.rifft Anspruch | |
| A | <u>DE - C - 163 693</u> (WHITE) | | |
| | | | |
| A | <u>CH - A - 219 065</u> (LANZ) | | |
| | | | **RECHERCHIERTE SACHGEBIETE** (Int. Cl.³) |

EPA Form 1503.2  06.78